# EUROPEAN PATENT APPLICATION

(11) **EP 1 885 082 A1**
(43) Date of publication of application: **06.02.2008**
(21) Application number: 07013073.7
(22) Date of filing: 04.07.2007
(51) Int. Cl.: H04L 12/24, H04L 12/46, H04L 29/06

(54) **Policy based VPN configuration for firewall/VPN security gateway applicance**

(30) Priority: 02.08.2006 US 835340 P; 29.03.2007 US 731091
(71) Applicant: O2 Micro, Inc., Santa Clara, CA 95054 (US)
(72) Inventor: Yang, Alan, Palo Alto CA 94303 (US); Liu, Yongqing, Chengdu, Sichuan 610041 (CN); Krems, Stevens, Tracy CA 95376 (US)
(74) Representative: Lippert, Stachow & Partner

(57) **Abstract**

A method for managing a networlc based Virtual Private Network (VPN) configuration is disclosed. The method includes configuring a VPN policy using a Graphical User Interface (GUI) of a centralized management server for at least two network devices. A VPN tunnel is established through the GUI of the centralized management server between the two network devices by applying the configured VPN policy.

## Description

### Cross Reference to Provisional Application

This application claims priority to the co-pending provisional patent application, Serial Number 60/835,340, Attorney Docket Number 02-IP-0286P, entitled "POLICY BASED VPN CONFIGURATION FOR FIREWALL/VPN SECURITY GATEWAY APPLIANCE," with filing date August 2, 2006, and assigned to the assignee of the present invention, which is herein incorporated by reference in its entirety.

### TECHNICAL FIELD

The present invention is related to network security appliances, and more particularly, to security gateway appliances that have a Virtual Private Network (VPN) configuration.

### BACKGROUND ART

As the popularity of the Internet grew, businesses turned to it as a means of extending their own networks, as a way to accommodate the exchange of information across the country or around the world, and there is one thing to be concerned: a way to maintain fast, secure, and reliable communications.

As a means of communicating with a plurality of branch offices, well known approaches are available. One approach involves the leasing of telecom lines or the establishing of a satellite data channel. The other approach is VPN. Because of the fee for purchasing or leasing extra equipments and maintenance, the most economical leasing or establishing approach is much more expensive than the VPN approach.

VPN is a private network that uses a public network, such as the Internet, to connect remote sites or users together, instead of using a dedicated, real-world connection, such as a leased line. For example, in a company, a VPN uses "virtual" connection called VPN tunnel routed through Internet from the company's private network to a remote site or employee.

The conventional way to configure and establish a VPN connection is a complicated procedure that is usually performed on a per device basis. An information Technology (IT) administrator needs to program the security gateway at each end in order to establish and secure a private communication tunnel. For each secured communication terminal, such as a Firewall and/or VPN security gateway appliance, the IT administrator needs to configure parameters of Internet Key Exchange (IKE) phase one and phase two, authentication method, encryption method and corresponding address or address group. For each VPN tunnel to be established, it should be involved to specify remote security gateway Internet Protocol (IP) address and next hop IP address. Even if the VPN policies to be applied to different devices are similar, the complicated procedure mentioned above has to be repeated and cannot be simplified.

As it regards the deployment and configuration of VPN, such is hard to accomplish in a massive deployment environment with many security gateway appliances involved. In addition, it is easy to make mistakes and hard to verify the correct settings before deployment. Once a wrong connection is deployed and causes a failure on a network connection, it is very hard to be repair.

### SUMMARY OF THE INVENTION

The present invention provides a method and an approach for managing a network based Virtual Private Network (VPN) configuration.

In order to achieve the above objective, the present invention provides a method for transmitting data through a VPN tunnel between at least two network devices. The method comprises configuring a VPN policy by a Graphical User Interface (GUI) from a centralized management server for at least two network devices. And, then a VPN tunnel is established through the GUI of the centralized management server between the two network devices by applying the configured VPN policy.

### BRIEF DESCRIPTION OF THE DRAWINGS

Other objectives, advantages, and novel features of the invention will become apparent from the following detailed description when taken in conjunction with the accompanying drawing.

FIG. 1 is a block diagram showing a multi-branch organization coupling the different branch offices together through VPN based on Internet, in accordance with one embodiment of the present invention.

FIG. 2 is a block diagram showing a physical organization of a network management system for configuring VPN policy and establishing a VPN tunnel, in accordance with one embodiment of the present invention.

FIG. 3 is a diagram showing a GUI presentation for configuring VPN policy for two network devices, in accordance with one embodiment of the present invention.

FIG. 4 is a diagram showing a method for managing a network based VPN configuration, in accordance with one embodiment of the present invention.

### DESCRIPTION OF THE EMBODIMENT

Reference will now be made in detail to the embodiments of the present invention, policy based Virtual Private Network (VPN) configuration for Firewall/VPN security gateway appliance. While the invention will be described in conjunction with the embodiments, it will be understood that they are not intended to limit the invention to these embodiments. On the contrary, the invention is intended to cover alternatives, modifications and equivalents, which may be included within the spirit and scope of the invention as defined by the appended claims.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

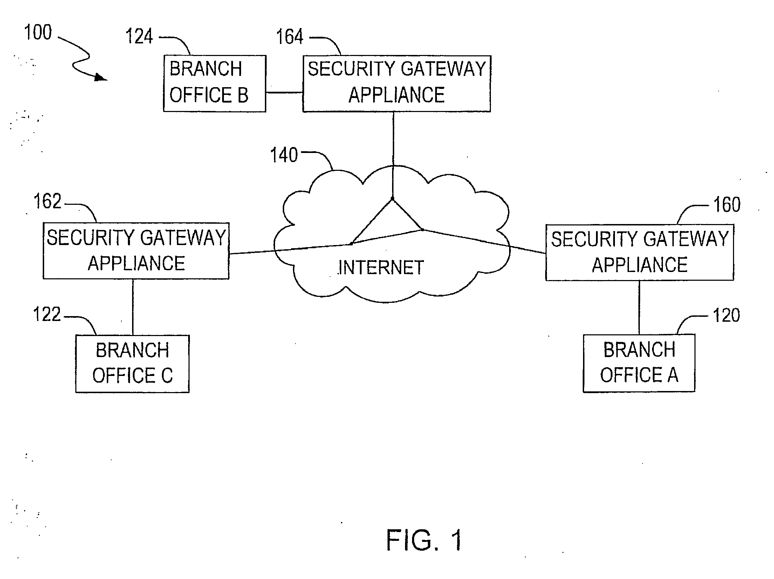

It is apparent to those skilled in the art that VPN technology uses encryption and tunneling to connect users in different locations or branch offices over the Internet, instead of relying on dedicated leased network lines. Referring to FIG. 1, a VPN system 100 has networks 120, 122 and 124 of branch offices which are located in different areas and are coupled together through VPN in accordance with one embodiment of the present invention.

In the FIG. 1 embodiment, the networks 120, 122 and 124 are coupled to Internet 140 respectively through security gateway appliances 160, 162 and 164 which can provide an interface to connect the private network with the Internet. Through configuring the security gateway appliances 160, 162 and 164, the communication between hosts of the networks 120, 122 and 124 will be protected.

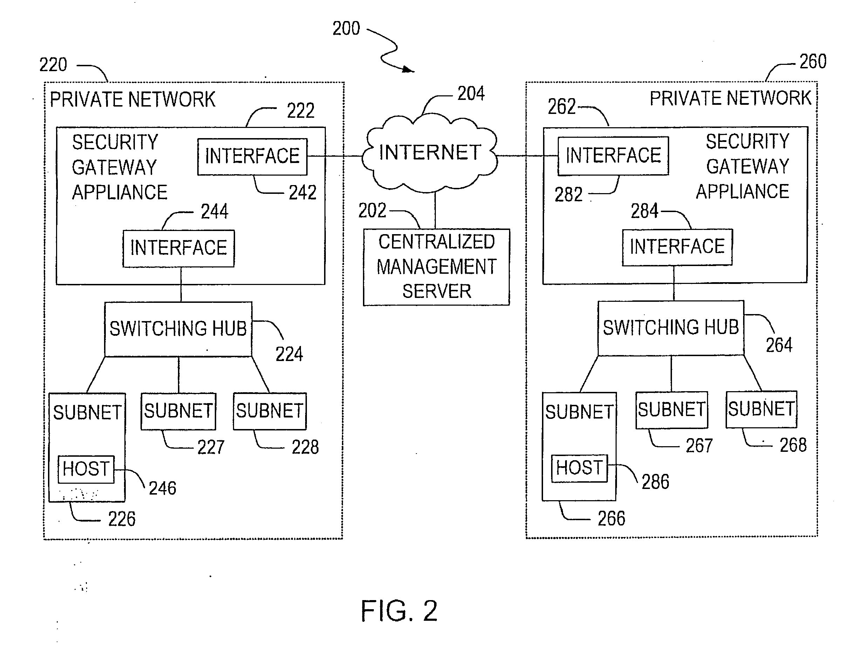

FIG. 2 shows an organization of a network 200 according to one embodiment of the present invention. The network 200 includes two private networks 220 and 260, a public network, such as Internet 204 and a centralized management server 202 coupled to the two private networks 220 and 260 through the Internet 204. The private networks 220 and 260 can reside in different locations. For example, the private networks 220 and 260 can be located in separate branch offices.

In one embodiment, the private network 220 can communicate with the private network 260 by means of configuring a VPN policy and building a VPN tunnel. As shown in FIG. 2, the private network 220 comprises a network device that operates as a secured connection terminal, for example security gateway appliance 222, a switch hub 224, and subnets 226, 227 and 228 coupled to the security gateway appliance 222 through the switching hub 224.

The security gateway appliance 222 supports VPN and/or Firewall function, in according to one embodiment of the present invention. With the VPN and Firewall function, the security gateway appliance 222 has the capability of performing connection building based VPN over an extra network, such as Internet 204, for two subnets, as well as packet filtering based on the configured filtering rules which decide the operations that can be performed on packets, such as drop, forward, and so on. The security gateway appliance 222 has two interfaces 242 and 244. The interface 242 is coupled to Internet 204, and is called Wide Area Network (WAN) port. The interface 244 is coupled to an internal network device, such as switching hub 224, and is called Local Area Network (LAN) port through IP address of which the network management software can define the security gateway appliance 222. The interface 244 may have multiple IP addresses assigned when there are multiple subnets coupled to the interface 244. The network management software can detect the subnets by calculating the number of the multiple IP addresses. For clarity, the three subnets 226, 227, and 228 are shown in FIG. 2. The subnets 226, 227 and 228 are coupled to the interface 244 of the security gateway appliance 222 through the switching hub 224. It will be apparent to those skilled in the art that usually the switching hub 224 and the subnets 226, 227 and 228 coupled to security gateway appliance 222 can comprise several work stations.

Referring to FIG. 2, the private network 260 is similar to the private network 220. The private network 260 comprises a security gateway appliance 262 coupled to the Internet 204, and subnets 266, 267 and 268 coupled to the security gateway appliance 262 through a switching hub 264. The security gateway appliance 262 has two interfaces 282 and 284 for coupling to external network and internal network devices, respectively.

The centralized management server 202 coupled to the private networks 220 and 260 through Internet 204 comprises network management software to perform as a security management platform for configuring and managing the communication between two connection terminals. In one embodiment, the network management comprises a Graphical User Interface (GUI). Through the intuitive Graphical User Interface (GUI), a VPN policy can be configured conveniently.

The VPN policy is an aggregation of parameters for VPN configuring, such as parameters of Internet Key Exchange (IKE) phase one and phase two, authentication method, and encryption method. IKE is the protocol used to setup a Security Association (SA) in the IP security (IPsec) protocol suite. Security architecture for IPsec is to provide various security services for traffic at the network layer of Open Systems Interconnection (OSI) seven layers model which includes physical layer, data link layer, transport layer, session layer, presentation layer and application layer. The upper layers including the application layer, the presentation layer and the session layer deal with application issues and generally are implemented only in software. The lower layers including the transport layer, the network layer, the data link layer and the physical layer handle data transport issues. IPsec provides security services at the network layer by enabling a system to select required security protocols, determine the algorithms to use for the services, and put in place any cryptographic keys required to provide the requested services. The set of security services that IPsec can provide includes access control, connectionless integrity, data origin authentication, rejection of replayed packets, encryption, and limited traffic flow confidentiality. IPsec uses two protocols to provide traffic security. These two protocols comprise Authentication Header (AH) and Encapsulating Security Payload (ESP). The AH protocol provides connectionless integrity, data origin authentication, and an optional anti-replay service. The ESP protocol may provide encryption, and limited traffic flow confidentiality, and the ESP protocol also may provide connectionless integrity, data origin authentication, and an' anti-replay service. In accordance with one embodiment of the present invention, ESP is implemented in security gateway. As such, the tunnel mode is used. In tunnel mode, the inner IP header carries the ultimate source and destination addresses. In addition, in tunnel mode, ESP protects the entire inner IP packet, including the entire inner IP header.

IKE provides key information used to generate encryption key and authentication key for two IPsec peers. In phase one of IKE process, IKE creates an authenticated, secure communication channel between the two IPsec peers. This is called the Internet Security Association and Key Management Protocol (ISAKMP) SA. Main Mode and Aggressive Mode each accomplish a phase one exchange. For example, a normal IKE negotiation process includes phase 1 and phase 2 negotiation, needs nine datagrams to establish the IPsec SA that the two need to communicate. After establishing the IPsec SA, the data stream transmitted can be encrypted by the SA.

According to one embodiment of the present invention, the security gateway appliance 222 can communicate with the security gateway appliance 262, for example, the security gateway appliance 222 serving as a source terminal can send the first datagram that is the policy comprising encryption algorithm, hash algorithm, D-H group, authentication method, lifetime and so on. As long as the same policy is configured on the security gateway appliance 262, the second datagram of the policy is sent back by the security gateway appliance 262 to indicate the policy which will be used to protect the communication between the security gateway appliances 222 and 262. The third and forth datagrams are for D-H exchange and D-H public value. After finishing the above four-datagram exchange, using the D-H algorithm, the security gateway appliances 222 and 262 can negotiate a public keying material from which a public key can be generated. The fifth and sixth datagrams are to authenticate the security gateway appliances 222 and 262 through IP addresses or hostnames. At this juncture, phase one of IKE is completed. The rest of three datagrams can be communicated in phase two of IKE, in one embodiment. In phase two, IKE mainly negotiates the IPsec SA and generates the required key material for IPsec. Using the public keying material negotiated in phase one, the three datagrams in phase two can be encrypted.

When a VPN tunnel is to be established between the security gateway appliance 222 and the security gateway appliance 262 for building a secure connection, IP addresses for each of the gateway appliances 222 and 262 can be configured first. The IP address of the interface 242 is configured for the gateway appliance 222, and the IP address of the interface 282 is configured for the gateway appliance 262. Then GUI of the centralized management server 202 presents icons for the gateway appliances 222 and 262. In addition, the security gateway appliances 222 and 262 can be selected by the configured VPN policy. In one embodiment, a line can be drawn (through dragging and dropping with a mouse on the GUI) between the two icons representing the two security gateway appliances 222 and 262. In this manner, the VPN tunnel between the two gateway appliances 222 and 262 can be established in one embodiment.

In one embodiment, through the network management software, the centralized management server 202 is able to detect subnets 226, 227 and 228 coupled to the gateway appliance 222. Using the IP address and network mask configured for the interface 244, the network management software calculates the class and the number of bits used for subnet Identification hence in deciding the subnetted network for each IP address configured for the interface 244. In one embodiment, when network management software detects multiple subnets, the GUI provides a prompt for the user to select a subnet or multiple subnets that should be covered by this configured VPN tunnel. For the one or multiple subnets selected by the user, the network management software can define the one or multiple subnets by IP address and network mask as a security domain. When there is one subnet coupled to the gateway appliance 222, the network management software can define the one subnet as the security domain directly. Similarly, through the network management software, the centralized management server 202 can also detect and define one or multiple subnets selected from subnets 266, 267 and 268 as another security domain. The data stream sent by the security domains can be encrypted through the established VPN tunnel.

Referring now back to the FIG. 2, the network 200 establishes an end-to-end secure tunnel coupling two private networks 220 and 260 or subnets, such as the subnets 226 and 266 to which the host 246 and the host 286 belong. When a host 246 of the subnet 226 is to send data to a host 286 of the subnet 266, outbound and inbound processes of IPsec are involved.

In one embodiment, a packet can be transmitted to the security gateway appliance 222 from the host 246 first. The outbound packet processing can be performed at the security gateway appliance 222. The IP output processing engine of the security gateway appliance 222, which is not shown in FIG. 2, searches the Security Policy Database (SPD) to find the matching entry for the packet. If there is no match, the packet is dropped. Next, from the matching SPD entry, it can be determined whether an active SA has already been established. If there is currently no active SA established a normal IKE negotiation process described as above is invoked. When an active SA has been established or if IKE functions return successfully, the IPsec protocol processing is invoked to encapsulate the packet according to the parameters specified in SA. Finally, the data packet can be sent through the outbound interface.

After the security gateway appliance 262 receives the data packet, the IP packet processing engine at security gateway appliance 262, which is not shown in FIG. 2, decides whether to accept the data packet. The packet processing engine extracts the Security Policy Index (SPI), protocol such as AH or ESP, destination IP address contained in IP, and AH or ESP header. It then uses this information to search and retrieve SA information from Security Association Database (SAD). If the SA is retrieved successfully, it decapsulates the packet checks the policy in the inbound side of the SPD to determine whether the packet is allowed and is to be passed to the upper layer of protocol, and transmitted to its final destination of the host 286. If the retrieval of SA failed or is not allowed by the policy specified in SPD, the packet is dropped.

In accordance with another embodiment of the present invention, the configured VPN policy described above can be used for other gateway appliances besides the gateway appliances 222 and 262. That is, the configured VPN policy can be applied to any other gateway appliances by means of selecting other gateway appliances to which to apply the VPN policy on the GUI. As such, the method for configuring VPN policy and establishing VPN tunnel can be applied in batch mode operation. In one embodiment, when any two devices that have configured IP addresses are about to be built a VPN tunnel and use a same VPN policy, a VPN policy can be.applied to these two devices, and a line drawn between the two devices through the GUI. In this manner, the VPN tunnel can be established. Compared with prior art systems to configure VPN policy on a device for building VPN tunnel (which need to apply the VPN policy one by one) the method according to exemplary embodiments of the present invention is more efficient.

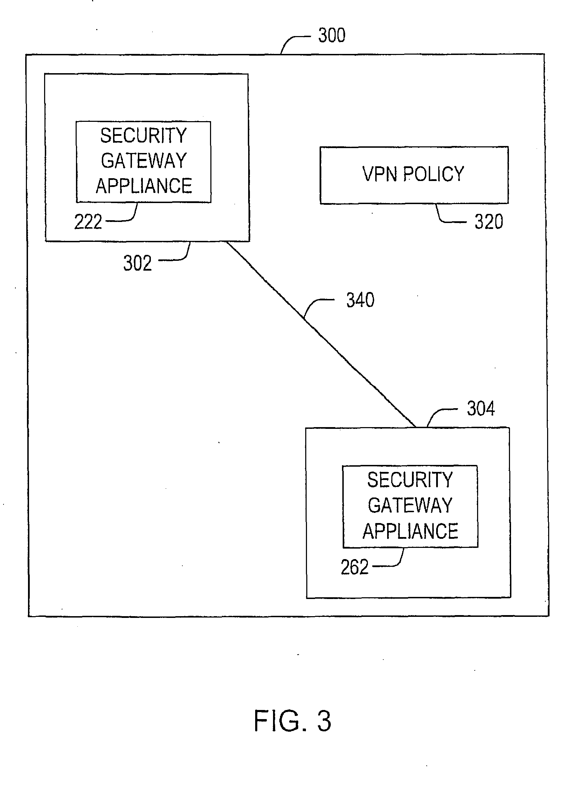

Referring to FIG. 3, a GUI presentation 300 for configuring VPN policy for two network devices through GUI of the network management software in accordance with one embodiment of the present invention is illustrated. The GUI presentation 300 includes two device icons 302 and 304 for two network devices, such as the security gateway appliances 222 and 262 shown in FIG. 2, and a VPN policy icon 320.

The network devices are defined by IP addresses of the WAN ports through the GUI of the centralized management server 202 shown in FIG. 2. After the network devices are configured, the GUI presents the device icons 302 and 304 on the GUI presentation 300.

The VPN policy is configured also through the GUI, which may comprise setting the names of IKE objects such as the security gateway appliances 222 and 262, the negotiation modes such as the main mode or aggressive mode, the strict algorithm match, Dead Peer Detection (DPD), DPD timeout, and transport mode. When the VPN policy is configured, the GUI presents the VPN policy icon 320. Upon, a click of the VPN policy icon 320, there is an option for the user to select network devices for applying the configured VPN policy to those network devices.

In one embodiment of the present invention, when the security gateway appliances 222 and 262 denoted by the device icons 302 and 306 respectively are selected by the configured VPN policy, in order to establish a VPN tunnel between the security gateway appliances 222 and 262, a line 340 can be drawn between device icons 302 and 304 on the GUI presentation 300.

When the VPN tunnel is established, the network management software calculates the corresponding subnet through the IP addresses and network masks. A user can be prompted by GUI presentation 300 for a selection on subnets which can be covered as security encryption domain by this VPN tunnel configuration, when multiple subnets are coupled.

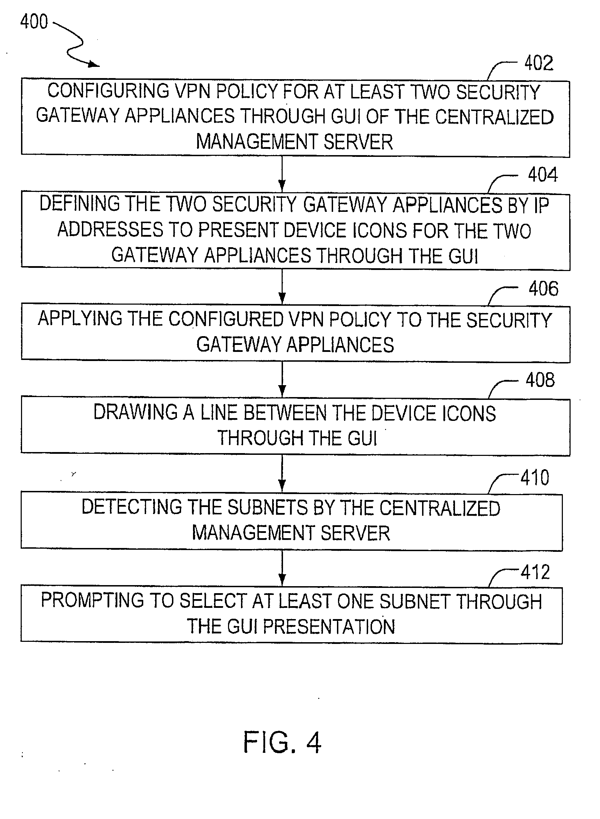

Referring to FIG. 4, a method 400 for establishing a network based VPN configuration according to one embodiment of the present invention is illustrated. At 402, through GUI of the centralized management server, a VPN policy is configured for at least two security gateway appliances which are to be built a VPN tunnel for transmitting data. The VPN policy configuration may include setting the names of IKE objects, such as security gateway appliances (e.g., 222 and 262 in FIG. 2), the negotiation modes, such as the main mode or aggressive mode, the strict algorithm match, Dead Peer Detection (DPD), DPD timeout, and transport mode. After the VPN policy is configured, a VPN policy icon is presented by the GUI of the centralized management server.

At 404, icons representing the two security gateway appliances are presented though the GUI by defining the IP addresses of the two gateway appliances. Every security gateway appliance has two interfaces, an interface for external network, called Wide Area Network (WAN) port, and the other one for internal network devices, called Local Area Network (LAN) port. Each of the two security gateway appliances is defined by the IP address of the interface of the external network through the GUI.

FIG. 4 shows the steps performed in a method for policy based configuration of gateway appliances. Referring to FIG. 4, at 406, through GUI, the VPN policy can be applied to any two security gateway appliances for establishing a VPN tunnel, as long as the security appliances are defined by the centralized management server. In accordance with one embodiment of the present invention, the security gateway appliances denoted by the device icons are selected to be applied in the configured VPN policy.

At 408, a line is drawn between the device icons representing the security gateway appliances using the GUI. The VPN tunnel is established by this step.

At 410, one or more subnets are coupled to the security gateway appliance. And, the centralized management server detects the subnets. When the VPN tunnel is established at 408, the network management software calculates the corresponding subnets that should be identified as security encryption domain through the IP addresses and network masks.

At 412, a user is prompted by the GUI presentation for a selection of a subnet that should be covered by this VPN tunnel configuration, when multiple subnets are coupled. When there is one subnet coupled to the security gateway appliance, the centralized management server can set the one subnet a security encryption domain automatically.

While the foregoing description and drawings represent the preferred embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. A method for managing a network based Virtual Private Network (VPN) configuration, said method comprising:
configuring a VPN policy through a Graphical User Interface (GUI) of a centralized management server for at least two network devices; and
establishing a VPN tunnel by means of said GUI of said centralized management server between said at least two network devices.

2. The method as claimed in claim 1, wherein said configuring said VPN policy further comprises:
setting a plurality of parameters for said VPN tunnel.

3. The method as claimed in claim 2, wherein said configuring said VPN policy further comprises:
applying said VPN policy configured through said GUI of said centralized management server to said network devices.

4. The method as claimed in claim 1, further comprising:
configuring a first IP address for each of said network devices through said GUI.

5. The method as claimed in claim 4, wherein said establishing a VPN tunnel further comprises:
detecting at least two subnets respectively coupled to each of said network devices in order to transmit data through said VPN tunnel; and
respectively defining said at least two subnets by a second IP address and a network mask of said subnets through said GUI.

6. The method as claimed in claim 5, further comprising:
detecting a plurality of subnets coupled to each of said network devices in order to transmit data through said VPN tunnel; and
prompting the selection of at least one subnet by a second IP address and a network mask of one of said plurality of subnets coupled to each of said network devices.

7. The method as claimed in claim 1, wherein said establishing said VPN tunnel further comprises:
presenting at least two device icons for said at least two network devices through said GUI, respectively;
presenting a VPN policy icon for said VPN policy through said GUI; and
drawing a line between said two device icons using said GUI.

8. The method as claimed in claim 1, further comprising:
establishing a second VPN tunnel using said GUI of said centralized management server between a second set of two security network devices by applying said VPN policy which is configured through said GUI of said centralized management server.

9. A method for establishing a VPN tunnel between at least two network devices through a GUI of a centralized management server, said method comprising:
presenting at least two device icons for said at least two network devices respectively;
presenting a VPN policy icon for a VPN policy;
drawing a line between said two device icons.

10. The method as claimed in claim 9, wherein said presenting said at least two device icons further comprises:
configuring an individual IP address for each of said network devices through said GUI of said centralized management server.

11. The method as claimed in claim 9, wherein said presenting said VPN policy icon comprises:
configuring said VPN policy by said GUI of said centralized management server for said at least two network devices.

12. The method as claimed in claim 11, further comprising:
selecting said network devices for applying said VPN policy to said network devices.

13. The method as claimed in claim 11, further comprising:
selecting a second set of at least two network devices for applying said VPN policy to said second set of said at least two network devices.

14. A system for configuring Virtual Private Network (VPN) policy and establishing a VPN tunnel, comprising:
a centralized management system, for coupling to at least two private networks that are coupled to a public network, for configuring said VPN policy of each of said private networks, wherein said centralized management system comprises network management software, and wherein said centralized management system establishes said VPN tunnel between said private networks through a Graphical User Interface (GUI) of said network management software.

15. The system as claimed in claim 14, wherein each of said two private networks comprises a network device comprising an interface for coupling to said public network.

16. The system as claimed in claim 15, wherein said network device is coupled to a subnet for transmitting data of said subnet.

17. The system as claimed in claim 15, wherein said network device is coupled to a plurality of subnets for transmitting data of said plurality of subnets.

18. The system as claimed in claim 17, wherein said GUI presents a prompt for selecting at least one subnet for said VPN tunnel.

19. The system as claimed in claim 15, wherein said network device is a security gateway appliance with VPN function, which uses encryption and tunneling to connect said network devices through said public network.

20. The system as claimed in claim 19, wherein said security gateway appliance has firewall function, which is capable of filtering data based on a plurality of filtering rules.

21. The system as claimed in claim 14, wherein said VPN tunnel can be configured in a batch mode in which said policy is capable of being applied for a second set of at least two network devices to establishing a second VPN tunnel.
